## Europäisches Patentamt
## European Patent Office
## Office européen des brevets

(19)

(11) Numéro de publication: **0 272 988**
**A1**

(12)

# DEMANDE DE BREVET EUROPEEN

(21) Numéro de dépôt: 87420304.5

(22) Date de dépôt: 06.11.87

(51) Int. Cl.⁴: **F 16 L 37/08**

(30) Priorité: 28.11.86 FR 8617107

(43) Date de publication de la demande:
29.06.88 Bulletin 88/26

(84) Etats contractants désignés:
AT BE CH DE ES GB GR IT LI LU NL SE

(71) Demandeur: PARKER HANNIFIN RAK S.A.
Z.I. du Mont-Blanc Ville-La-Grand B.P. 482
F-74108 Annemasse Cédex (FR)

(72) Inventeur: Badoureaux, Jean-Pierre
Fillinges
F-74250 Viuz en Sallaz (FR)

(74) Mandataire: Maureau, Pierre et al
Cabinet GERMAIN & MAUREAU B.P. 3011
F-69392 Lyon Cédex 03 (FR)

(54) Perfectionnement aux dispositifs de raccordement rapide pour tubes souples, semi-rigides ou rigides.

(57) Ce dispositif de raccordement est du type comportant un corps tubulaire (3) avec une butée intérieure (7) et un poussoir de découplage (14).

D'une part, la bague de protection (17) présente, du côté de la bague à griffes (12), une face non concave et le diamètre de son alésage (17a) est légèrement supérieur au diamètre externe du tube (2) de manière qu'en fonctionnement, elle prenne appui contre la bague à griffes (12) par le bord correspondant de son alésage (17a), c'est-à-dire au voisinage des extrémités libres des griffes (12b) et, d'autre part, la longueur du poussoir de découplage (14) est telle qu'en position normale d'utilisation sous pression du dispositif, la bague à griffes (12), qui est déplacée dans le sens (flèche 15) du retrait du tube (2) par l'action de la pression, soit en appui, par sa partie centrale, contre l'extrémité intérieure du poussoir (14) et non par sa périphérie (12a), contre l'extrémité intérieure de son écrou tubulaire de retenue (13).

FIG.1

## Description

"Perfectionnement aux dispositifs de raccordement rapide pour tubes souples,semi-rigides ou rigides"

La présente invention concerne un perfectionnement aux dispositifs de raccordement rapide pour tubes souples, semi-rigides ou rigides.

On connaît, notamment par le brevet français 1 474 023, de tels dispositifs de raccordement rapide par simple introduction du tube comportant un corps tubulaire présentant une butée intérieure limitant l'introduction du tube et comprenant, intérieurement, une bague de retenue ou bague à griffes, élastiquement déformable, dont la partie centrale comporte une pluralité de doigts ou griffes destinées à s'ancrer dans le tube en vue de s'opposer à son retrait, un poussoir de découplage, coaxial au corps tubulaire et au tube, permettant d'écarter les griffes en vue du retrait du tube et des moyens d'étanchéité étant prévus entre le tube et le corps tubulaire et/ou le poussoir.

Dans les dispositifs de ce type, le bord périphérique de la bague à griffes est logé entre un épaulement interne du corps tubulaire et un écrou tubulaire de retenue, avec, éventuellement, ménagement d'un jeu axial entre la bague à griffes et l'écrou tubulaire et l'épaulement qui l'encadrent.

On connaît aussi, notamment par le brevet français 2 368 663, un dispositif de ce type dans lequel le joint d'étanchéité prévu entre le tube et l'alésage du corps tubulaire est logé dans un évidement annulaire du corps tubulaire situé entre la bague à griffes et l'épaulement limitant l'engagement du tube et dans lequel une bague de protection, interposée entre le joint et la bague à griffes présente, du côté de cette dernière, une face conique femelle complémentaire de la forme conique mâle adoptée par la bague à griffes lors des manoeuvres du poussoir de découplage des griffes.

Cette bague de protection a donc le double rôle de protéger le joint des griffes de la bague à griffes et de limiter à une valeur acceptable la déformation de ces dernières en position de découplage.

Cependant, en position d'utilisation du dispositif, c'est-à-dire lorsque le fluide traversant le dispositif et le tube est sous pression, le joint et le tube, repoussés par la pression dans le sens du retrait du tube, tendent à appliquer la bague de protection contre la bague à griffes.

Or, les griffes n'étant pas en position déformée de découplage et compte tenu de sa face conique, la bague de protection prend appui contre la bague à griffes par son bord périphérique ce qui, par conséquent, a pour effet d'appliquer le bord périphérique de la bague à griffes contre l'épaulement formé par son écrou tubulaire de retenue. Ainsi, en fonctionnement et même si un jeu axial est prévu entre elle et les épaulements qui l'encadrent, la bague à griffes se trouve solidarisée avec le corps tubulaire du dispositif qui est évidemment fixe en rotation.

Il en résulte que si, pour une raison quelconque telle que les mouvements d'un robot, le tube est pivoté sur lui-même, la bague à griffes étant elle-même immobilisée dans le dispositif, ses griffes taillent, dans le tube, un filet hélicoïdal allant jusqu'à son retrait par dévissage.

La présente invention vise à remédier à cet inconvénient. A cet effet, dans le dispositif qu'elle concerne et qui est du type précité, d'une part, la bague de protection intercalée entre le joint d'étanchéité et la bague à griffes présente, du côté de la bague à griffes, une face non concave et le diamètre de son alésage est légèrement supérieur au diamètre externe du tube de manière qu'en fonctionnement, elle prenne appui contre la bague à griffes par le bord périphérique de son alésage, c'est-à-dire au voisinage des extrémités libres des griffes et, d'autre part, la longueur du poussoir de découplage est telle qu'en position normale d'utilisation sous pression du dispositif, la bague à griffes, qui est déplacée dans le sens du retrait du tube par l'action de la pression, soit en appui, par sa partie centrale, contre l'extrémité intérieure du poussoir par sa périphérie, et non contre l'extrémité intérieure de son écrou tubulaire de retenue.

De toute façon, l'invention sera bien comprise à l'aide de la description qui suit en référence au dessin schématique annexé représentant, à titre d'exemple non limitatif, une forme d'exécution du dispositif de raccordement rapide muni de ce perfectionnement :

Figure 1 en est une vue en coupe axiale en position d'utilisation à l'état sous pression ;

Figure 2 montre, à échelle agrandie, une partie de l'objet de figure 1 dans la position occupée lorsque le fluide conduit par le dispositif est sous pression ;

Figure 3 est une vue similaire à figure 2 montrant le dispositif en position de découplage du tube.

Le dispositif de raccordement rapide pour tubes souples, semi-rigides ou rigides 2 est du type comportant un corps tubulaire 3 dont une extrémité est pourvue de moyens de raccordement rigide à un organe d'alimentation tel qu'un distributeur ou autre similaire. Dans l'exemple illustré sur le dessin, ce moyen de raccordement rigide est un embout fileté mâle 4.

Ce corps tubulaire 3 présente, dans son alésage 5, un épaulement intérieur 6 destiné à constituer une butée de limitation de l'introduction du tube 2. L'alésage 5 présente, à une distance de l'embout fileté 4 supérieure à celle de l'épaulement 6, un premier gradin 7 destiné à ménager une chambre annulaire 8 pour loger un joint d'étanchéité 9, normalement comprimé entre l'alésage 8a de la chambre 8 et la face externe du tube 2. A une distance de l'embout fileté mâle 4 encore supérieure, l'alésage 5 présente un deuxième gradin 10 délimitant, en partie, une chambre annulaire 11 destinée à loger la partie périphérique externe 12a d'une bague à griffes 12 d'un type connu, la chambre 11 étant fermée, du côté opposé au gradin 9, par un écrou tubulaire de retenue 13. Entre l'alésage 13a de l'écrou tubulaire 13 et le tube 2, coulisse un poussoir tubulaire de découplage 14. Un épaulement annulaire externe 14a, logé dans un évidement annulaire interne 13b de l'écrou tubulaire 13, limite les déplacements, dans le sens inverse de la flèche 15, du poussoir de découplage 14.

Comme cela est connu en soi, la bague à griffes 12 présente, faisant saillie dans son alésage, des griffes 12b destinées à s'ancrer dans le tube 2 après engagement de ce dernier dans l'alésage du corps 3, jusqu'à ce qu'il soit en butée contre l'épaulement 6 prévu dans cet alésage. Le poussoir de découplage 14 permet, en étant actionné dans le sens de la flèche 16 et par appui de son extrémité intérieure contre les griffes 12b de la bague à griffes 12, de dégager ces dernières hors de la paroi du tube 2, non seulement en vue de permettre son retrait hors du corps 3, mais également pour éviter que sa face externe ne soit altérée lors de son engagement.

Comme il a été indiqué précédemment, dans les dispositifs connus de ce type, en fonctionnement, même si un jeu axial est ménagé entre les parois frontales de la chambre 11 et la partie périphérique 12a de la bague à griffes 12, la bague à griffes 12 est rendue solidaire du corps tubulaire 3, qui est lui-même immobilisé en rotation par l'organe dans lequel son embout mâle est vissé. Or, si le tube 2 est entraîné en rotation sur lui-même par les mouvements qui lui sont imprimés à son autre extrémité (il peut s'agir de l'extrémité mobile d'un bras de robot par exemple), les griffes 12b de la bague à griffes 12 taillent, dans la face externe du tube 2, un filet hélicoïdal pouvant aller jusqu'à provoquer le dévissage du tube 2 hors du corps tubulaire 3.

Comme le montre le dessin, pour éviter de tels inconvénients, selon l'invention, entre le joint d'étanchéité 9 qui, dans cet exemple, est un joint torique, et la bague à griffes 12, est interposée une bague de protection 17 dont la face tournée du côté de la bague à griffes 12 n'est pas conique concave. Dans l'exemple illustré sur le dessin, cette face est plane. Le diamètre extérieur de la bague de protection 17 est inférieur à l'alésage 8a de la chambre 8 pour lui permettre de se déplacer librement axialement, et le diamètre de son alésage 17a est un peu supérieur au diamètre externe du tube 2, de manière à ménager entre eux un jeu annulaire 18 dont le rôle sera expliqué plus loin, mais un peu inférieur au diamètre des parties de l'alésage de la bague à griffes 12 constituant les intervalles entre griffes 12b. Il en résulte que le bord de l'alésage 17a de la bague de protection 17 en contact avec la bague à griffes 12 est en appui contre les griffes 12b et non contre le bord de la bague à griffes 12.

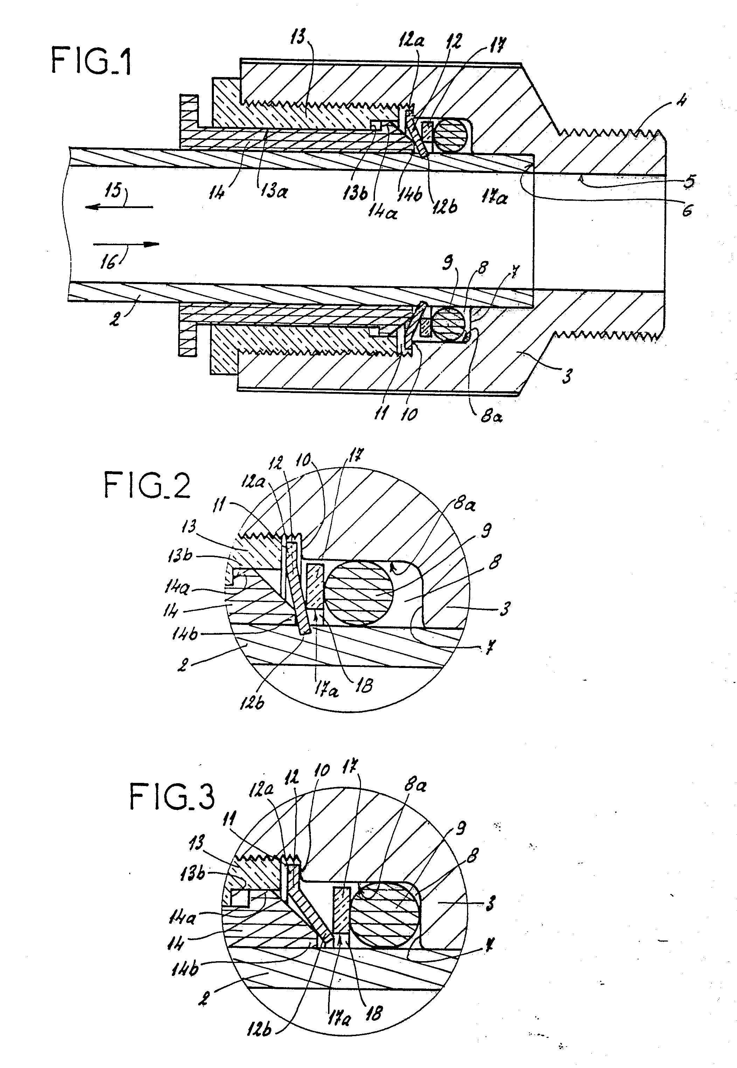

Ainsi, lorsque le fluide traversant le dispositif, c'est-à-dire l'alésage 5 du corps 3 et l'alésage du tube 2 est sous pression, comme illustré sur la figure 2, les forces communiquées par cette pression au joint d'étanchéité 9 sont transmises à la bague à griffes 12 par l'intermédiaire de la bague de protection 17 non pas à la périphérie de la bague à griffes 12 mais au niveau de ses griffes 12b, ce qui a pour effet d'appliquer ces dernières contre l'extrémité interne 14b du poussoir de découplage 14 qui est lui-même en butée contre le fond de son logement 13b ménagé dans l'écrou tubulaire 13, de telle sorte que la bague à griffes 12 est totalement libre en rotation par rapport au corps 3 du dispositif ainsi que par rapport à son écrou tubulaire de retenue 13 mais qu'au contraire, elle est liée en rotation au tube 2. Naturellement, la longueur du poussoir 14 est déterminée pour que, lorsque, sous l'effet de la pression du fluide véhiculé, son épaulement 14a est en appui contre le fond de son logement 13a, l'appui des griffes 12b de la bague à griffes 12 contre son extrémité interne 14b empêche tout appui de sa périphérie 12a contre l'extrémité interne de son écrou tubulaire de retenue 13.

Toute rotation sur lui-même imprimée au tube 2 peut donc être exécutée sans risque pour la paroi de ce dernier puisque, dans ce cas, il est accompagné par la bague à griffes 12 qui est elle-même libre de pivoter à l'intérieur du dispositif.

Le jeu 18 ménagé entre l'alésage 17a de la bague de protection 17 et le diamètre extérieur du tube 2 a pour effet de permettre la flexion des griffes 12b de la bague à griffes 12 dans le sens de leur désengagement du tube 2 lors de la manoeuvre du poussoir de découplage 14 dans le sens de la flèche 16, comme illustré sur la figure 3.

## Revendications

Dispositif de raccordement rapide pour tubes souples, semi-rigides ou rigides, du type comportant un corps tubulaire (3) présentant une butée intérieure (7) qui limite l'introduction du tube (2) et comprenant, intérieurement, une bague de retenue (12) ou bague à griffes élastiquement déformables et dont la partie centrale comporte une pluralité de doigts ou griffes (12b) destinée à s'ancrer dans le tube (2) en vue de s'opposer à son retrait, un poussoir de découplage (14), coaxial au corps tubulaire (3) et au tube (2) et permettant d'écarter les griffes (12b) en vue du retrait du tube (2), le bord périphérique (12a) de la bague à griffes 12 étant logé entre un épaulement interne (10) du corps tubulaire (3) et un écrou tubulaire de retenue (13) avec, éventuellement, ménagement d'un jeu axial entre la bague à griffes (12) et l'écrou tubulaire (13) et l'épaulement (10) qui l'encadrent, et un joint d'étanchéité (9), prévu entre le tube (2) et l'alésage du corps tubulaire (3), étant logé dans un évidement annulaire (8) du corps tubulaire (3) situé entre la bague à griffes (12) et l'épaulement (7) qui limite l'engagement du tube (2), tandis qu'une bague de protection (17) est interposée entre le joint (9) et la bague à griffes (12), caractérisé en ce que, d'une part, la bague de protection (17) présente, du côté de la bague à griffes (12), une face non concave et le diamètre de son alésage (17a) est légèrement supérieur au diamètre externe du tube (2) de manière qu'en fonctionnement, elle prenne appui contre la bague à griffes (12) par le bord correspondant de son alésage (17a), c'est-à-dire au voisinage des extrémités libres des griffes (12b) et, d'autre part, la longueur du poussoir de découplage (14) est telle qu'en position normale d'utilisation sous pression du dispositif, la bague à griffes (12), qui est déplacée dans le sens (flèche 15) du retrait du tube (2) par l'action de la pression, soit en appui, par sa partie centrale, contre l'extrémité intérieure du poussoir (14) et non par sa périphérie (12a), contre l'extrémité intérieure de son écrou tubulaire de retenue (13).

0272988

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 385 024  (PARKER HANNIFIN RAK)<br>* Figure; pages 1,2 *<br>--- | 1 | F 16 L   37/08 |
| A | EP-A-0 160 559  (NIHON PISCO K.K.)<br>* Figure 2; page 2, lignes 27,28; page 3, lignes 1-17 *<br>--- | 1 | |
| A | FR-A-2 309 783  (GASSERT)<br>* Page 3, lignes 1-39; page 4, lignes 1-5 *<br>----- | 1 | |

DOMAINES TECHNIQUES RECHERCHES (Int. Cl.4)

F 16 L

Le présent rapport a été établi pour toutes les revendications

| Lieu de la recherche | Date d'achèvement de la recherche | Examinateur |
|---|---|---|
| LA HAYE | 02-03-1988 | NOESEN R.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)